# FASCICULE DE BREVET EUROPEEN

(11) **EP 1 141 537 B1**
(45) Date de publication et mention de la délivrance du brevet: **12.03.2003**
(21) Numéro de dépôt: 99958300.8
(22) Date de dépôt: 10.12.1999
(51) Int. Cl.: F02M 37/22, B01D 35/143

(54) **DETECTION DE L'ENCRASSEMENT D'UN FILTRE A CARBURANT D'UN CIRCUIT D'ALIMENTATION D'UN MOTEUR A COMBUSTION INTERNE**
BRENNSTOFFFILTERVERSCHMUTZUNGSMESSUNG EINES BRENNSTOFFVERSORGUNGSSYTEMS EINER BRENNKRAFTMASCHINE
METHOD FOR DETECTING CLOGGING IN A FUEL FILTER IN AN INTERNAL COMBUSTION ENGINE SUPPLY CIRCUIT

(30) Priorité: 14.12.1998 FR 9815755
(43) Date de publication de la demande: 10.10.2001
(73) Titulaire: MAGNETI MARELLI FRANCE, 92000 Nanterre (FR)
(72) Inventeur: MAZET, Henri, F-78400 Chatou (FR)
(74) Mandataire: Bérogin, Francis
(86) Numéro de dépôt international: FR9903098
(87) Numéro de publication internationale: WO00036291

(56) Documents cités:
- DE-C- 4 117 422
- DE-C- 19 622 176
- US-A- 5 477 731
- US-A- 5 505 180
- US-A- 5 595 138
- US-A- 5 699 772

## Description

L'invention concerne un procédé et un dispositif de détection de l'encrassement d'un filtre à carburant d'un circuit d'alimentation d'un moteur à combustion interne.

L'invention concerne plus particulièrement les circuits d'alimentation de moteurs à injection directe ou indirecte de carburant, les circuits d'alimentation étant du type dans lequel un filtre à carburant est disposé entre un régulateur de pression de carburant, en aval du filtre et délivrant du carburant à une pression imposée vers le moteur, et une pompe de refoulement de carburant provenant d'un réservoir, cette pompe étant disposée en amont du filtre et alimentant le régulateur au travers du filtre, cette pompe étant généralement une pompe électrique, c'est-à-dire une pompe entraînée par un moteur électrique.

Ces circuits d'alimentation, pour moteurs marins ou pour véhicules automobiles et du type à allumage commandé ou à allumage par compression (diesel), sont classiquement tels que le régulateur de pression, en aval d'une rampe d'alimentation d'injecteurs, maintient dans cette rampe une pression d'alimentation des injecteurs qui est une pression différentielle sensiblement constante entre la pression du carburant et la pression atmosphérique ou pression au collecteur d'admission d'air au moteur, quelle que soit la demande du moteur en carburant, c'est-à-dire quel que soit le débit de carburant injecté dans le moteur par les injecteurs, selon les conditions de fonctionnement du moteur, le carburant en excès étant retourné vers le réservoir par le régulateur de pression, comme connu notamment par EP 0 577 477 et la figure 1 de FR 2 725 244.

Sur les systèmes d'injection à haute pression à allumage commandé ou diesel, la pompe et le régulateur entre lesquels est disposé le filtre en question sont des composants à basse pression, qui n'alimentent pas directement la rampe d'injecteurs, mais alimentant une seconde pompe à haute pression, et un second régulateur, à haute pression, qui alimentent la rampe.

Dans d'autres circuits de carburant, le régulateur de pression est en amont de la rampe d'alimentation des injecteurs, entre l'entrée de cette rampe et le filtre à carburant en aval de la pompe, et de préférence à proximité du réservoir ou dans ce dernier, sur une conduite de dérivation qui débouche dans le réservoir et le régulateur se raccorde à la conduite d'alimentation, entre le filtre et l'entrée de la rampe, le régulateur de pression assurant dans ce cas également le retour du carburant en excès vers le réservoir, comme connu par la figure 2 de FR 2 725 244.

On connaît également d'autres circuits d'alimentation de carburant, du type « sans retour », c'est-à-dire sans canalisation de retour au réservoir du carburant en excès au niveau du régulateur de pression, ce dernier étant d'ailleurs supprimé dans certains circuits de ce type, dans lesquels l'alimentation électrique de la pompe est contrôlée par un capteur sensible à la pression régnant dans la canalisation d'alimentation reliant la pompe à la rampe d'alimentation des injecteurs, de sorte que la pompe est électriquement alimentée pour imposer une pression en sortie de pompe qui est égale à la pression d'utilisation requise au niveau des injecteurs.

Mais dans d'autres circuits de type « sans retour », le régulateur de pression de carburant est un régulateur-détendeur alimentant la rampe d'alimentation des injecteurs, et un capteur manométrique, disposé dans le réservoir ou à proximité de ce dernier et relié par une prise de pression à la conduite d'alimentation en aval ou en amont du filtre, entre la pompe et le régulateur-détendeur, pilote l'alimentation électrique du moteur d'entraînement de la pompe de sorte que le régulateur-détendeur soit alimenté en carburant à une pression supérieure à la pression d'utilisation requise en sortie du régulateur-détendeur, comme connu par US-5,398,655 et les figures 4 et 5 de FR 2 725 244.

Dans les circuits « sans retour » des brevets précédemment cités, la pompe électrique est pilotée en boucle fermée, à partir de la mesure d'un paramètre de fonctionnement du circuit d'alimentation, qui est la pression de carburant à la sortie de la pompe, mais qui peut aussi être le débit d'air au collecteur d'admission d'air au moteur, lequel débit d'air est indirectement lié au débit de carburant consommé par le moteur, comme connu par FR 2 686 947.

En outre, que le circuit de carburant soit avec ou sans retour du carburant en excès au niveau du régulateur de pression, le circuit peut être tel que la pompe est disposée dans un bol de réserve de carburant, lui-même disposé dans le réservoir de carburant, et vers lequel bol une partie du carburant refoulé par la pompe est dérivée, sous la forme d'au moins un jet de carburant injecté dans le bol avec un débit nécessaire pour éviter le désamorçage de la pompe.

Dans tous ces circuits connus d'alimentation en carburant, dans lesquels le filtre en aval de la pompe de refoulement est fréquemment intégré avec cette pompe dans un sous-ensemble logé à l'intérieur du réservoir de carburant, on comprend que l'encrassement du filtre peut entraîner son colmatage au moins partiel et perturber le bon fonctionnement du système d'injection du moteur à combustion interne, voire même d'interrompre son alimentation en carburant. En raison de la disposition du filtre à l'intérieur du réservoir de carburant, et donc de l'accessibilité réduite au filtre pour procéder à son remplacement en cas de besoin, il est apparu souhaitable sinon nécessaire de prévoir une maintenance préventive ou prédictive notamment du filtre, et, dans ce but, de proposer un procédé et un dispositif de détection de l'encrassement de ce filtre à carburant.

A cet effet, le procédé selon l'invention, pour la détection de l'encrassement d'un filtre à carburant disposé, dans un circuit d'alimentation en carburant d'un moteur à combustion interne, entre, d'une part, un régulateur de pression de carburant, en aval du filtre, et du type fonctionnant en dérivation, délivrant du carburant à une pression imposée vers l'amont et vers le moteur à combustion interne, et, d'autre part; une pompe de refoulement de carburant provenant d'un réservoir, la pompe étant disposée en amont de ce filtre et alimentant le régulateur au travers du filtre, se caractérise en ce qu'il comprend au moins les étapes consistant à :
- déterminer la pression de carburant en sortie de pompe, et à l'assimiler à la pression de carburant à l'entrée du filtre,
- déterminer la pression de carburant en sortie du filtre comme étant la pression imposée par le régulateur de pression,
- déterminer la perte de charge du filtre par la différence entre les pressions d'entrée et de sortie du filtre,
- comparer au moins une valeur fonction de ladite perte de charge à au moins une valeur de référence, et à en déduire une information relative à l'état d'encrassement du filtre, de préférence en déterminant que le filtre est encrassé si ladite valeur fonction de la perte de charge est supérieure à au moins ladite valeur de référence.

Pour déterminer la pression de carburant en sortie de pompe ou à l'entrée du filtre, ce procédé peut consister à mesurer la pression de carburant à l'aide d'au moins un capteur de pression entre la sortie de la pompe et l'entrée du filtre.

Mais cette détermination suppose l'utilisation d'un capteur de pression, qui est un organe coûteux, et, selon une variante avantageusement économique du procédé de l'invention, ce procédé consiste à déterminer la pression de carburant en sortie de pompe à l'aide d'au moins une relation entre ladite pression en sortie de pompe et l'un au moins des paramètres de fonctionnement de la pompe que sont la vitesse de rotation instantanée de la pompe, le courant moyen d'alimentation d'un moteur électrique d'entraînement de la pompe, et l'état thermique de la pompe.

En d'autres termes, la pression de carburant en sortie de pompe peut être déterminée à l'aide d'au moins un modèle de fonctionnement de la pompe, prenant en compte au moins les paramètres précités de fonctionnement de la pompe, et en particulier le courant moyen d'alimentation du moteur électrique d'entraînement de la pompe, puisque, de manière connue, ce courant moyen permet de déterminer le couple d'entraînement de la pompe, ce couple permettant lui-même de déterminer, notamment à l'aide de courbes caractéristiques, la pression en sortie de pompe.

De manière simple, le procédé peut comprendre une étape consistant à déterminer le courant moyen d'alimentation du moteur électrique d'entraînement de la pompe à l'aide d'une mesure d'une chute de tension aux bornes d'un shunt dans le circuit d'alimentation électrique dudit moteur.

Toutefois, un modèle de fonctionnement de la pompe de meilleure qualité pour la détermination en boucle ouverte de la pression en sortie de pompe peut être obtenu en prenant également en compte la vitesse de rotation instantanée de la pompe ainsi que son état thermique.

Avantageusement à cet effet, le procédé peut, de plus, consister à entraîner la pompe par un moteur électrique à collecteur commuté, et à déterminer la vitesse de rotation instantanée de la pompe à l'aide d'au moins la vitesse de rotation instantanée du moteur électrique, qui est déterminée par analyse du courant instantané dans le moteur de la pompe et détection des commutations du collecteur dudit moteur de la pompe.

Pour ce qui est de déterminer l'état thermique de la pompe, le procédé peut consister de plus à mesurer simplement la température de la pompe et/ou à estimer cette température à l'aide d'au moins une relation entre cette température et au moins un paramètre de fonctionnement de ladite pompe, c'est-à-dire à l'aide d'un modèle thermique de la pompe.

L'étape de comparaison d'au moins une valeur fonction de la perte de charge du filtre à au moins une valeur de référence peut comprendre au moins une comparaison d'au moins une valeur absolue de cette perte de charge du filtre, pour au moins un débit ou au moins une plage de débit de travail donné(e) du circuit, à au moins une valeur de seuil pour au moins le même débit ou au moins la même plage de débit de carburant et/ou au moins une comparaison d'au moins une valeur de pente de variation de la perte de charge du filtre dans le temps à au moins un seuil de pente, pour au moins un débit ou au moins une plage de débit de travail donné(e) du circuit. Bien entendu, le ou les seuil(s), de valeur absolue et/ou de pente de variation de la perte de charge dans le temps, est ou sont établis, et indexés en particulier en débit, pour donner une alerte suffisamment longtemps avant tout risque de colmatage substantiel du filtre, en tenant compte de valeurs absolues ou relatives mesurées ou déterminées, dans les mêmes conditions de débit, pour d'autres filtres de circuits identiques et corrélées avec les états d'encrassement de ces filtres constatés lors de démontages.

Cependant, pour effectuer une maintenance préventive ou prédictive de meilleure qualité, il est avantageux de suivre l'évolution dans le temps de la perte de charge d'un même filtre, et, à cet effet, l'étape de comparaison précitée comprend avantageusement au moins une comparaison d'au moins une valeur absolue et/ou de pente de variation de perte de charge du filtre, à un instant donné, à au moins une valeur analogue considérée à au moins un instant antérieur, pour au moins un débit ou au moins une plage de débit de travail donné(e) du circuit, et en particulier à des instants antérieurs respectivement aux redémarrages antérieurs du moteur, les valeurs analogues correspondantes étant sauvegardées par mémorisation pendant les arrêts du moteur.

Les étapes de comparaison consistent donc à comparer en fait des tables de valeurs mesurées et/ou calculées de perte de charge, indexées en particulier en fonction du débit, à des tables de valeurs de référence également indexées en particulier en fonction du débit de carburant.

Pour la mise en oeuvre du procédé présenté ci-dessus, afin de détecter l'encrassement d'un filtre à carburant disposé entre la sortie d'une pompe entraînée par un moteur électrique et refoulant du carburant provenant d'un réservoir, et l'entrée d'un régulateur de pression de carburant alimenté par la pompe au travers du filtre et du type fonctionnant en dérivation, imposant une pression de carburant vers l'amont et vers le moteur, l'invention propose également un dispositif de détection qui se caractérise en ce qu'il comprend au moins une unité électronique de commande, contrôlant le fonctionnement de la pompe et de son moteur électrique d'entraînement, et qui, d'une part, connaît la pression de carburant imposée par le régulateur en fonction des besoins en carburant du moteur, et, d'autre part, détermine la pression de carburant en sortie de pompe en fonction d'au moins un paramètre de fonctionnement de la pompe et/ou d'alimentation électrique et/ou de fonctionnement de son moteur électrique d'entraînement, telle que la vitesse de rotation instantanée de la pompe, le courant moyen d'alimentation du moteur électrique d'entraînement et l'état thermique de la pompe, ladite unité électronique de commande calculant la perte de charge dans le filtre comme étant la différence entre les pressions de carburant en sortie de pompe et imposée par le régulateur, et comparant au moins une valeur fonction de ladite perte de charge et/ou d'au moins une variation de ladite perte de charge à au moins une valeur de référence pour en déduire une information sur l'état d'encrassement du filtre.

D'autres avantages et caractéristiques de l'invention ressortiront de la description donnée ci-dessous, à titre non limitatif, d'un exemple de réalisation décrit en référence aux dessins annexés sur lesquels :
- la figure 1 est une vue schématique du circuit d'alimentation en carburant d'un moteur à injection, et
- la figure 2 est un schéma bloc d'une partie de l'unité électronique de commande du circuit de la figure 1 pour calculer la perte de charge du filtre de ce circuit.

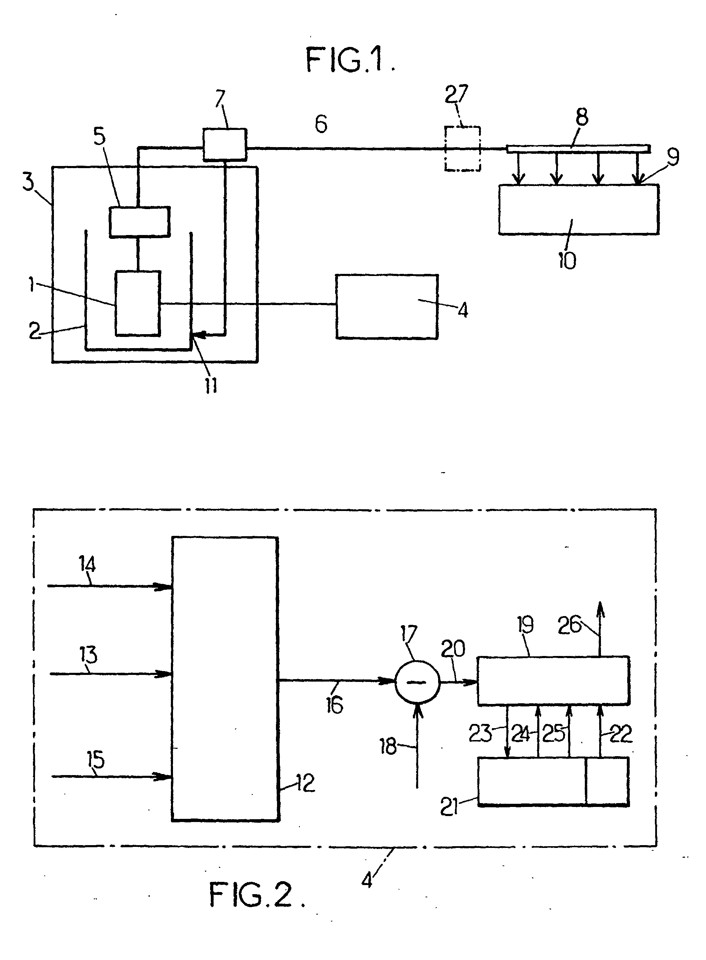

Le circuit d'alimentation en carburant de la figure 1 comprend une pompe à carburant 1, qui est une pompe électrique de toute structure appropriée connue, comportant un étage de pompage entraîné en rotation par un moteur électrique. Dans cet exemple, ce moteur est du type alimenté en courant électrique par commutation d'un collecteur du moteur, le circuit d'alimentation électrique du moteur de la pompe 1, à partir de la batterie d'un véhicule automobile par exemple, comportant, de manière connue, un shunt de mesure du courant moyen d'alimentation de ce moteur électrique par mesure d'une différence de potentiel aux bornes de ce shunt.

La pompe électrique 1 est disposée dans un bol 2 de réserve de carburant, ce bol 2 étant lui-même disposé sur le fond d'un réservoir de carburant 3.

Le moteur électrique de la pompe 1 est alimenté en courant électrique, à partir de la batterie du véhicule, par l'intermédiaire d'une unité électronique de commande 4, qui contrôle le fonctionnement de la pompe 1 et de son moteur électrique, et qui mesure notamment le courant électrique moyen alimentant ce moteur par la mesure de la différence de tension aux bornes du shunt précité dans le circuit d'alimentation électrique de ce moteur, ainsi que la vitesse instantanée de rotation de ce moteur, et donc la vitesse instantanée de rotation de la pompe 1, par l'analyse du courant instantané du moteur de la pompe 1 et détection des commutations du collecteur de ce moteur. Comme connu et pratiqué en laboratoire, la détection des commutations du collecteur de ce moteur peut être assurée par filtrage dans au moins un filtre passe-haut du courant instantané de ce moteur électrique.

La pompe 1 prélève du carburant dans le bol de réserve 2, de préférence au travers d'un filtre amont (non représenté), et refoule le carburant au travers d'un filtre aval 5 dans une canalisation d'alimentation 6 vers un régulateur 7 de pression de carburant.

Ce régulateur 7 assure, d'une part, l'alimentation en carburant d'une rampe 8, à l'extrémité aval de la canalisation d'alimentation 6, et qui est une rampe commune d'alimentation des injecteurs 9 du moteur 10 à combustion interne équipant le véhicule. A cet effet, le régulateur 7 est du type fonctionnant « en dérivation », c'est-à-dire comme s'il était monté en dérivation sur la canalisation d'alimentation 6 et pilotait une « fuite » de carburant vers le moteur 10. En conséquence, le régulateur 7 impose une pression de carburant vers l'amont comme vers la rampe 8 du moteur 10 en aval. D'autre part, le régulateur 7 dérive, vers le bol de réserve 2, une fraction du carburant refoulé par la pompe 1 dans la canalisation d'alimentation 6, et cette fraction de carburant dérivée est retournée au bol 2 sous la forme d'un jet 11 injecté dans la base du bol 2 avec un débit minimum nécessaire pour éviter le désamorçage de la pompe 1, en fonction des conditions de remplissage du réservoir 3 et d'autres paramètres tels que les mouvements du véhicule, la température du carburant, ....

Si le moteur 10 est un moteur à allumage commandé à injection indirecte, le régulateur 7 alimente directement la rampe 8 en carburant à une pression de service satisfaisante pour une alimentation des injecteurs 9 avec une pression différentielle sensiblement constante entre la pression de carburant et la pression d'air au collecteur d'admission du moteur.

Si le moteur 10 est un moteur à allumage commandé à injection directe, ou à allumage par compression, le régulateur 7 alimente indirectement la rampe 8, par l'intermédiaire d'une pompe à haute pression associée à un régulateur à haute pression (non représentés) qui détermine la pression d'injection du carburant par les injecteurs 9.

Dans les deux cas, le régulateur 7 est d'un type bien connu, dont la caractéristique de pression en fonction du débit est connue par construction et telle que le régulateur 7 nécessite un débit minimal d'alimentation en carburant pour son bon fonctionnement, c'est-à-dire pour qu'il puisse délivrer, vers la rampe 8 en aval, du carburant sous une pression satisfaisante, quelle que soit la demande en carburant du moteur 10.

En variante, la fraction du carburant refoulé par la pompe 1 et utilisée pour alimenter le jet 11 dans le bol de réserve 2, est dérivée de la conduite d'alimentation 6, en amont du régulateur 7, entre ce dernier et le filtre 5.

Le filtre 5, le régulateur 7 et la dérivation de carburant vers le jet 11 peuvent être organisés sous la forme d'un sous-ensemble à proximité du réservoir 3, ou dans ce dernier, dans lequel ce sous-ensemble peut être directement associé à la pompe 1.

L'unité de commande 4 peut être une unité qui, au travers de l'alimentation électrique du moteur de la pompe 1, surveille son fonctionnement et, à partir de paramètres d'alimentation et de fonctionnement de la pompe 1 et de son moteur électrique, et en particulier du courant moyen d'alimentation du moteur de la pompe 1 et de sa vitesse instantanée de rotation, mesurés comme indiqué ci-dessus, détermine par calculs et consultation de cartographies appropriées, la pression de carburant en sortie de la pompe 1.

Mais, de préférence, l'unité 4 pilote la pompe 1 pour que son débit réel soit autant que possible aligné sur un débit objectif, correspondant sensiblement au débit minimum nécessaire pour satisfaire aux besoins du moteur à combustion interne 10, pour chaque point de fonctionnement de ce dernier, et satisfaire simultanément au débit minimum de bon fonctionnement du régulateur 7 et de bonne alimentation du jet 11 de retour dans le bol de réserve 2 pour éviter le désamorçage de la pompé 1.

En particulier, l'unité de commande 4 peut piloter la pompe électrique 1 de la manière décrite dans la demande de brevet français FR 98 08991 du Demandeur.

Dans les deux cas, que l'unité de commande 4 assure simplement l'alimentation électrique du moteur de la pompe 1 et la surveillance du bon fonctionnement de cette pompe 1, ou que l'unité de commande 4 assure un pilotage de la pompe 1 sur un débit objectif, cette unité 4 détermine, par estimation et/ou calcul, la pression de carburant en sortie de pompe 1, cette pression étant assimilée à la pression de carburant à l'entrée du filtre 5, et, en tenant compte d'une pression de carburant imposée par le régulateur 7, qui est connue par l'unité 4 et assimilée à la pression en aval du filtre 5, l'unité 4 calcule la perte de charge dans le filtre 5 comme étant égale à la différence entre la pression de carburant en sortie de pompe 1 et la pression de carburant imposée par le régulateur 7 en aval du filtre 5, cette perte de charge étant considérée par l'unité 4 comme représentative de l'état d'encrassement du filtre 5.

La détermination d'au moins une valeur fonction de la perte de charge du filtre 5, image de son encrassement, et sa comparaison à au moins une valeur de référence, pour délivrer un signal utilisable pour une maintenance préventive ou prédictive en donnant une alarme en cas d'encrassement critique du filtre 5 est décrite ci-dessous en référence à la figure 2, qui est un schéma bloc représentant partiellement et schématiquement la structure de l'unité 4 et certaines fonctions remplies dans cette unité 4.

Sur la figure 2, l'unité 4 comporte un bloc 12 de modélisation du fonctionnement de la pompe électrique 1, ce bloc 12 comportant des circuits de calcul et de traitement de signal et de données mettant en oeuvre des algorithmes et des programmes permettant de simuler le fonctionnement de la pompe 1 et de déterminer certaines grandeurs, en particulier la pression de carburant en sortie de pompe 1, en fonction de paramètres de fonctionnement et d'alimentation de la pompe 1 et de son moteur électrique. Le bloc de modélisation 12 comprend des microprocesseurs et/ou microcontrôleurs et des mémoires dans lesquelles sont enregistrées des cartographies exprimant les valeurs ou courbes caractéristiques de certains paramètres de la pompe en fonction d'autres paramètres, et en particulier des cartographies donnant des valeurs de pression en sortie de la pompe 1 en fonction du courant moyen d'alimentation du moteur électrique de la pompe 1, de la vitesse instantanée de rotation de ce dernier et également de la température de l'étage de pompage de la pompe, cette température pouvant directement être mesurée par au moins un capteur de température ou déterminée dans un autre bloc de modélisation contenu dans l'unité 4, cet autre bloc étant un bloc de modèle thermique de la pompe 1.

En particulier, le bloc de modélisation 12 reçoit en 13 un signal représentatif du courant moyen d'alimentation du moteur électrique de la pompe 1, ce courant moyen étant mesuré, comme déjà expliqué ci-dessus, par la mesure d'une chute de tension aux bornes d'un shunt dans le circuit électrique d'alimentation du moteur. Ce signal de courant moyen 13 est le principal paramètre de fonctionnement pris en compte par le bloc de modélisation 12 pour déterminer la pression de sortie de la pompe 1, car on sait que cette pression de sortie est fonction du couple d'entraînement de la pompe 1, ce couple étant lui-même fonction du courant moyen d'alimentation du moteur électrique d'entraînement de la pompe 1. Toutefois, une détermination plus précise de la pression de sortie de la pompe 1 est réalisée en tenant également compte d'un signal 14 de vitesse instantanée de rotation du moteur de la pompe, qui est reçu par le bloc 12 et élaboré, comme également expliqué ci-dessus, par analyse du courant d'alimentation du moteur de la pompe 1, et détection des commutations de son collecteur. Un autre paramètre de fonctionnement de la pompe 1, pris en compte pour une bonne détermination de la pression en sortie de pompe 1, est la température de la pompe, et un signal 15 représentatif de cette température est reçu par le bloc 12, en provenance soit d'un capteur de température (non représenté), soit d'un autre bloc (non représenté) mettant en oeuvre un modèle thermique de la pompe 1. A partir des signaux 13, 14 et 15 précités, reçus par le bloc 12, et à l'aide d'une relation entre la pression de sortie de la pompe 1 et les paramètres correspondant aux signaux 13, 14 et 15, le bloc 12 élabore un signal 16 correspondant à une estimation de la pression de sortie de la pompe 1, et ce signal 16 est transmis à un soustracteur 17 recevant également un signal 18 de pression imposée par le régulateur 7 en aval du filtre 5.

Ce signal 18 de pression du régulateur 7 est transmis à l'unité 4 par une unité électronique de contrôle moteur (non représentée) de tout type convenable connu, qui pilote l'injection et, le cas échéant, l'allumage dans le moteur 10, ou le signal 18 est élaboré par l'unité 4 à partir d'informations provenant de l'unité de contrôle moteur et de données mémorisées dans l'unité 4 et concernant des valeurs ou courbes caractéristiques de fonctionnement du régulateur 7, en particulier sa caractéristique pression-débit, connues par construction.

L'unité électronique de contrôle moteur connaît les instants et durées d'injection du carburant par les injecteurs 9 dans les cylindres du moteur 10, pour tout point de fonctionnement du moteur, puisqu'elle pilote l'injection, et, lorsque le moteur 10 est un moteur à allumage commandé, également et avantageusement l'allumage, ainsi éventuellement que d'autres fonctions, telles que l'anti-patinage, ou encore l'admission d'air dans le cas d'un corps papillon motorisé, et donc la pression imposée par le régulateur 7, puisque ce dernier, par construction, travaille généralement à pression différentielle constante entre la pression de carburant qu'il délivre et la pression d'admission d'air au moteur 10.

L'unité électronique de commande 4 du circuit de carburant est ainsi associée à l'unité de contrôle moteur, dans laquelle elle est avantageusement au moins partiellement intégrée, sauf éventuellement pour son étage de puissance parcouru par des courants relativement importants pour l'alimentation électrique du moteur de la pompe 1.

En calculant la différence entre le signal 16 de pression en sortie de la pompe 1 et le signal 18 de pression imposée par le régulateur 7, c'est-à-dire en calculant la différence entre des signaux représentant respectivement les pressions d'entrée et de sortie du filtre 5, le soustracteur 17 délivre au comparateur 19 un signal 20 représentatif de la perte de charge dans le filtre 5.

Le comparateur 19 effectue des comparaisons entre le signal 20 de perte de charge instantanée, qu'il reçoit du soustracteur 17 et transmet en 23 à un bloc 21 de génération de valeur de référence, et au moins une valeur de référence, qui peut être un seuil 22 de valeur absolue de perte de charge, mémorisé dans une partie du bloc 21, et/ou un seuil de référence 24 constitué par la valeur absolue de la perte de charge calculée à un instant antérieur et mémorisée dans le bloc 21. Simultanément, le comparateur 19 et/ou le bloc 21 peut également calculer des moyennes de la perte de charge 20 mesurée sur des intervalles de temps glissants ou des pentes de variations de la perte de charge et les mémoriser dans des registres à décalages du bloc 21, et le comparateur 19 peut également comparer une moyenne ou une pente de variation de la perte de charge 20 à une ou plusieurs moyennes ou pentes 25 de variation de la perte de charge qui ont été mémorisées à des instants antérieurs dans le bloc 21.

En particulier, une valeur de consigne initiale de la perte de charge peut être déterminée pour chaque type de circuit, destiné par exemple à un modèle particulier de véhicule en moyennant les mesures initiales sur un certain nombre de tels circuits en bon état. Puis, à la première mise en fonctionnement du moteur d'un véhicule alimenté par un circuit de ce type, on mesure la perte de charge initiale du filtre de ce circuit, et on la compare à la valeur de consigne initiale pour ne valider et mémoriser la valeur mesurée comme valeur de consigne initiale « personnalisée », ou propre à ce circuit, que si la différence entre la valeur mesurée et la valeur de consigne initiale est à l'intérieur d'une plage de tolérance prédéterminée, admise par avance par rapport à la valeur de consigne initiale, pour tenir compte des tolérances de fabrication et montage des différents composants du circuit d'alimentation.

Le suivi dans le temps de l'état d'encrassement du filtre est assuré en surveillant l'évolution dans le temps de la variation de la perte de charge par comparaison de la perte de charge instantanée avec la valeur de consigne initiale personnalisée et des valeurs de perte de charge mesurées et mémorisées au cours des différentes périodes de fonctionnement du moteur, et sauvegardées dans les mémoires de l'unité 4 pendant les périodes d'arrêt du moteur 10.

Comme la perte de charge d'un filtre dépend en particulier du débit de carburant qui le traverse, les valeurs absolues et/ou relatives (pentes de variations) de la perte de charge qui sont comparées et/ou mémorisées, sont considérées en tenant compte au moins des valeurs du débit de travail du circuit aux instants de mesure correspondants. De ce fait, les valeurs de référence auxquelles les valeurs mesurées ou calculées sont comparées sont des valeurs tirées de tables de références indexées, en particulier en fonction du débit. Le débit de travail instantané du circuit peut être connu par l'unité électronique de commande 4 par un signal de débit instantané délivré par le bloc de modélisation de la pompe. De même, la valeur de consigne individualisée mentionnée ci-dessus est en fait une table de valeurs de consigne individualisée en fonction du débit.

Pour ces raisons, le suivi en temps réel des évolutions de l'état d'encrassement du filtre 5 est en fait assuré en comparant des tables de valeurs mémorisées de la perte de charge du filtre et indexées en fonction du débit à des tables de valeurs de référence indexées en particulier en fonction du débit.

Ceci permet de suivre en temps réel l'évolution de l'encrassement du filtre 5 par référence à une ou plusieurs valeurs absolues ou relatives, déterminées statistiquement par des essais ou des mesures en fonctionnement sur des circuits d'alimentation identiques, ou par référence à des valeurs absolues ou relatives de perte de charge mesurées pour ce même filtre 5 à des instants antérieurs, au cours des périodes antérieures de fonctionnement du moteur, avec mémorisation des valeurs dans des mémoires du calculateur pendant les arrêts du moteur.

Le comparateur 19 peut ainsi délivrer un signal de sortie 26 représentatif de l'état d'encrassement du filtre 5. En particulier, le signal de sortie 26 peut être un signal d'alerte si une valeur fonction de la perte de charge absolue 20 mesurée instantanément est supérieure à un seuil de référence 22 correspondant à un état d'encrassement critique du filtre 5.

En variante, et comme représenté en traits interrompus sur la figure 1, le circuit d'alimentation en carburant peut comprendre de plus un régulateur-détendeur 27, immédiatement en amont de la rampe 8, entre cette dernière et le régulateur de pression 7 vers le réservoir 3 ou dans ce dernier. Ce régulateur-détendeur 27 peut être un régulateur à membrane avec clapet d'entrée, du type connu par exemple par US-5,398,655 et FR 2 725 244. Le régulateur-détendeur 27 définit la pression de carburant dans la rampe 8 à partir d'une pression de carburant supérieure qu'il reçoit du régulateur 7, qui peut être un régulateur à faible coût, assurant une régulation de pression moins précise que dans la configuration de circuits sans régulateur-détendeur 27.

## Revendications

1. Procédé de détection de l'encrassement d'un filtre (5) à carburant, disposé dans un circuit d'alimentation en carburant d'un moteur à combustion interne (10), entre un régulateur (7) de pression de carburant, en aval du filtre (5), et du type fonctionnant en dérivation, délivrant du carburant à une pression imposée vers l'amont et vers ledit moteur (10), et une pompe (1) de refoulement de carburant provenant d'un réservoir (3), ladite pompe (1) étant disposée en amont du filtre (5), et alimentant ledit régulateur (7) au travers du filtre (5), **caractérisé en ce qu'**il comprend au moins les étapes consistant à :
- déterminer la pression de carburant (16) en sortie de pompe (1), et à l'assimiler à la pression de carburant à l'entrée du filtre (5),
- déterminer la pression de carburant en sortie du filtre (5) comme étant la pression (18) imposée par le régulateur (7) de pression,
- déterminer la perte de charge (20) du filtre (5) par la différence entre les pressions d'entrée et de sortie du filtre (5),
- comparer au moins une valeur fonction de ladite perte de charge (20) à au moins une valeur de référence (22, 24), et à en déduire une information relative à l'état d'encrassement du filtre (5), de préférence en déterminant que le filtre (5) est encrassé si ladite valeur fonction de la perte de charge (20) est supérieure à au moins ladite valeur de référence (22, 24).

2. Procédé selon la revendication 1, **caractérisé en ce qu'**il consiste à déterminer la pression de carburant en sortie de pompe (1) ou à l'entrée du filtre (5) en mesurant ladite pression de carburant à l'aide d'au moins un capteur de pression entre la sortie de la pompe (1) et l'entrée du filtre (5).

3. Procédé selon la revendication 1, **caractérisé en ce qu'**il consiste à déterminer la pression de carburant (16) en sortie de pompe (1) à l'aide d'au moins une relation entre ladite pression en sortie de pompe et l'un au moins des paramètres de fonctionnement de la pompe (1) que sont la vitesse de rotation instantanée (14) de la pompe (1), le courant moyen (13) d'alimentation d'un moteur électrique d'entraînement de la pompe (1), et l'état thermique (15) de la pompe (1).

4. Procédé selon la revendication 3, **caractérisé en ce qu'**il consiste à entraîner la pompe (1) par un moteur électrique à collecteur commuté, et à déterminer la vitesse de rotation instantanée (14) de la pompe (1) à l'aide d'au moins la vitesse de rotation instantanée du moteur qui est déterminée par analyse du courant instantané dans le moteur de la pompe (1) et détection des commutations du collecteur dudit moteur de la pompe (1).

5. Procédé selon l'une des revendications 3 et 4, **caractérisé en ce qu'**il consiste à déterminer le courant moyen (13) d'alimentation du moteur électrique d'entraînement de la pompe (1) à l'aide d'une mesure d'une chute de tension aux bornes d'un shunt dans le circuit d'alimentation électrique dudit moteur.

6. Procédé selon l'une des revendications 3 à 5, **caractérisé en ce qu'**il consiste à déterminer l'état thermique (15) de la pompe (1) en mesurant et/ou estimant la température de la pompe (1) à l'aide d'au moins une relation entre la température de la pompe et au moins un paramètre de fonctionnement de ladite pompe (1).

7. Procédé selon l'une quelconque des revendications 1 à 6, **caractérisé en ce que** l'étape de comparaison (19) d'au moins une valeur fonction de ladite perte de charge à au moins une valeur de référence comprend au moins une comparaison d'au moins une valeur absolue de ladite perte de charge (20) dans le filtre (5), pour au moins un débit ou au moins une plage de débit de travail donné(e) du circuit, à au moins une valeur de seuil (22, 24) pour au moins le même débit ou au moins la même plage de débit de carburant.

8. Procédé selon l'une quelconque des revendications. 1 à 7, **caractérisé en ce que** l'étape de comparaison (19) d'au moins une valeur fonction de ladite perte de charge à au moins une valeur de référence comprend au moins une comparaison d'au moins une valeur de pente de variation de la perte de charge (20) du filtre (5) dans le temps à au moins un seuil de pente (25), pour au moins un débit ou au moins une plage de débit de travail donné(e) du circuit.

9. Procédé selon l'une quelconque des revendications 1 à 8, **caractérisé en ce que** l'étape de comparaison (19) d'au moins une valeur fonction de la perte de charge à au moins une valeur de référence comprend au moins une comparaison d'au moins une valeur absolue et/ou de pente de variation de perte de charge (20) du filtre (5), à un instant donné, à au moins une valeur analogue (24, 25) à au moins un instant antérieur, pour au moins un débit ou au moins une plage de débit de travail donné(e) du circuit.

10. Dispositif de détection de l'encrassement d'un filtre (5) à carburant d'un circuit d'alimentation en carburant d'un moteur à combustion interne (10), le filtre (5) étant disposé entre la sortie d'une pompe (1) entraînée par un moteur électrique et refoulant du carburant provenant d'un réservoir (3), et l'entrée d'un régulateur (7) de pression de carburant alimenté par la pompe (1) au travers du filtre (5) et imposant une pression de carburant vers le moteur (10), **caractérisé en ce qu'**il comprend une unité électronique de commande (4), contrôlant le fonctionnement de la pompe (1) et de son moteur électrique d'entraînement, et qui, d'une part, connaît la pression de carburant (18) imposée par le régulateur (7) en fonction des besoins en carburant du moteur (10), et, d'autre part, détermine la pression de carburant (16) en sortie de pompe (1) en fonction d'au moins un paramètre de fonctionnement de la pompe (1) et/ou d'alimentation électrique et/ou de fonctionnement de son moteur électrique d'entraînement, tel que la vitesse de rotation instantanée (14) de la pompe (1), le courant moyen (13) d'alimentation du moteur électrique d'entraînement et l'état thermique (15) de la pompe (1), ladite unité électronique de commande (4) calculant la perte de charge (20) dans le filtre (5) comme étant la différence entre les pressions de carburant (16) en sortie de pompe (1) et imposée (18) par le régulateur (7), et comparant (19) au moins une valeur fonction de ladite perte de charge (20) et/ou d'au moins une variation de ladite perte de charge (20) à au moins une valeur de référence (22, 24, 25) pour en déduire une information (26) sur l'état d'encrassement du filtre (5).

## Claims

1. Method of detecting clogging in a fuel filter (5) provided in a fuel supply circuit of an internal combustion engine (10), and disposed between a fuel pressure regulator (7) downstream of the filter (5) and of the type operating on a bypass system delivering fuel at an imposed pressure upstream and towards said internal combustion engine (10) and a pump (1) for delivering fuel from a tank (3), said pump (1) being disposed upstream of the filter (5) and supplying said regulator (7) via the filter (5), **characterised in that** it comprises at least the following steps, which consist in:
- determining the fuel pressure (16) at the output of the pump (1) and assimilating it with the fuel pressure at the intake of the filter (5),
- determining the fuel pressure at the outlet of the filter (5) as being the pressure (18) imposed by the pressure regulator (7),
- determining the drop in pressure (20) of the filter (5) on the basis of the difference between the intake and outlet pressure levels of the filter (5),
- comparing at least one value based on said pressure drop (20) with at least one reference value (22, 24) and deriving information therefrom relating to the clogging condition of the filter (5), preferably by determining that the filter (5) is clogged if said value based on the pressure drop (20) is higher than at least said reference value (22, 24).

2. Method as claimed in claim 1, **characterised in that** it consists in determining the fuel pressure at the pump (1) output or at the intake of the filter (5) by measuring said fuel pressure by means of at least one pressure sensor between the output of the pump (1) and the intake of the filter (5).

3. Method as claimed in claim 1, **characterised in that** it consists in determining the fuel pressure (16) at the pump (1) output on the basis of at least one relationship between said pump output pressure and at least one of the operating parameters of the pump (1), which are the instantaneous rotation speed (14) of the pump (1), the mean supply current (13) of an electric motor driving the pump (1) and the thermal state (15) of the pump (1).

4. Method as claimed in claim 3, **characterised in that** it consists in driving the pump (1) by means of an electric motor with a commutating collector and determining the instantaneous rotation speed (14) of the pump (1) on the basis of at least the instantaneous rotation speed of the electric motor, which is determined by analysing the instantaneous current in the pump (1) motor and detecting commutations of the collector of said pump (1) motor.

5. Method as claimed in anyone ofclaims 3 and 4, **characterised in that** it consists in determining the mean supply current (13) of the electric motor driving the pump (1) by measuring a drop in voltage at the terminals of a shunt in the electric supply circuit of said motor.

6. Method as claimed in anyone ofclaims 3 to 5, **characterised in that** it consists in determining the thermal state (15) of the pump (1) by measuring and/or estimating the temperature of the pump (1) on the basis of at least one relationship between the temperature of the pump and at least one operating parameter of said pump (1).

7. Method as claimed in anyone of claims I to 6, **characterised in that** the step of comparing (19) at least one value based on said pressure drop with at least one reference value incorporates at least one comparison of at least one absolute value of said pressure drop (20) in the fiiter (5) for at least one work rate or at least a given work rate range of the circuit with at least one threshold value (22, 24) for at least the same rate or at least the same range of fuel rate.

8. Method as claimed in anyone of claims 1 to 7, **characterised in that** the step of comparing (19) at least one value based on said pressure drop with at least one reference value incorporates at least a comparison of at least one slope value for the pressure drop (20) variation in the filter (5) over time with at least a slope threshold (25) for at least one work rate or at least a given work rate range of the circuit.

9. Method as claimed in anyone of claims 1 to 8, **characterised in that** the step of comparing (19) at least one value based on the pressure drop with at least one reference value incorporates at least one comparison of at least one absolute value and/or slope value of the pressure drop (20) variation in the filter (5) at a given instant with at least a similar value (24, 25) at at least a previous instant for at least one work rate or at least a given work rate range of the circuit.

10. Device for detecting clogging in a fuel filter (5) of a fuel supply circuit of an internal combustion engine (10), the filter (5) being disposed between the output of a pump (1) driven by an electric motor and delivering fuel from a tank (3), and the intake of a fuel pressure regulator (7) supplied by the pump (1) via the filter (5) and imposing a fuel pressure towards the engine (10), **characterised in that** it has at least one electronic control unit (4), controlling operation of the pump (1) and its electric drive motor, and which, on the one hand, knows the fuel pressure (18) imposed by the regulator (7) depending on the fuel requirements of the engine (10), and, on the other hand, determines the fuel pressure (16) at the pump (1) output on the basis of at least one operating parameter of the pump (1) and/or the electric supply 20 and/or operation of its electric drive motor, such as the instantaneous rotation speed (14) of the pump, the mean supply current (13) of the electric drive motor and the thermal state (15) of the pump (1), said electronic control unit (4) computing the pressure drop (20) in the filter (5) as being the difference between the pressure levels of fuel (16) at the pump (1) outlet and imposed (18) by the regulator (7), and comparing (19) at least one value based on said pressure drop (20) and/or at least one variation in said pressure drop (20) with at least one reference value (22, 24, 25) in order to deduce information (26) therefrom about the state of clogging in the filter (5).

## Patentansprüche

1. Verfahren zur Erfassung der Verschmutzung eines Kraftstofffilters (5), der in einem Kraftstoffversorgungskreislauf eines Verbrennungsmotors (10) angeordnet ist und zwar zwischen einem Regler (7) für den Kraftstoffdruck des mit einem Bypass arbeitenden Typs stromabwärts des Filters (5), der Kraftstoff mit einem angelegten Druck stromaufwärts und Richtung Motor (10) liefert, und einer Pumpe (1) zum Fördern aus dem Tank (3) kommenden Kraftstoffs, die stromaufwärts des Filters (5) angeordnet ist und die den Regler (7) über den Filter (5) versorgt,
**dadurch gekennzeichnet, dass**,
es wenigstens die Schritte umfasst, die darin bestehen:
- bestimmen des Kraftstoffdrucks (16) am Ausgang der Pumpe (1) und gleichsetzen dieses mit dem Kraftstoffdruck am Eingang des Filters (5),
- bestimmen des Kraftstoffdrucks am Ausgang des Filters (5), als sei er der durch den Druckregler (7) angelegte Druck (18),
- bestimmen des Druckverlusts (20) des Filters (5) mittels der Differenz zwischen den Drücken am Eingang und am Ausgang des Filters (5),
- vergleichen wenigstens eines Funktionswerts des Druckverlusts (20) mit wenigstens einem Referenzwert (22, 24), um daraus eine relative Information über den Verschmutzungszustand des Filters (5) zu ziehen, vorzugsweise, indem man bestimmt, dass der Filter (5) verschmutzt ist, wenn der Funktionswert des Druckverlusts (20) größer als mindestens der Referenzwert (22, 24) ist.

2. Verfahren nach Anspruch 1, **dadurch gekennzeichnet, dass** es darin besteht, den Kraftstoffdruck am Ausgang der Pumpe (1) oder am Eingang des Filters (5) zu bestimmen, indem der Kraftstoffdruck mit Hilfe von wenigstens einem Drucksensor zwischen dem Ausgang der Pumpe (1) und dem Eingang des Filters (5) gemessen wird.

3. Verfahren nach Anspruch 1, **dadurch gekennzeichnet, dass** es darin besteht, den Kraftstoffdruck (16) am Ausgang der Pumpe (1) mit Hilfe von wenigstens einer Relation zwischen dem Druck am Ausgang der Pumpe und eines wenigstens der Funktionsparameter der Pumpe (1) zu bestimmen, die da sind die Momentandrehzahl (14) der Pumpe (1), der mittlere Versorgungsstrom (13) eines elektrischen Motors zum Antrieb der Pumpe (1) und der thermische Zustand (15) der Pumpe (1).

4. Verfahren nach Anspruch 3, **dadurch gekennzeichnet, dass** es darin besteht, die Pumpe (1) durch einen geschalteten elektrischen Kommutatormotor anzutreiben und die Momentandrehzahl (14) der Pumpe (1) mit Hilfe von wenigstens der Momentandrehzahl des Motors, die durch Analyse des Momentanstroms in dem Motor der Pumpe (1) und Erfassung der Umschaltungen des Kommutators des Motors der Pumpe (1) bestimmt wird, zu bestimmen.

5. Verfahren nach einem der Ansprüche 3 und 4, **dadurch gekennzeichnet, dass** es darin besteht, den mittleren Versorgungsstrom (13) des elektrischen Motors zum Antrieb der Pumpe (1) mit Hilfe einer Messung eines Spannungsabfalls an den Anschlüssen eines Shunts in der elektrischen Versorgungsschaltung des Motors zu bestimmen.

6. Verfahren nach einem der Ansprüche 3 bis 5, **dadurch gekennzeichnet, dass** es darin besteht, den thermischen Zustand (15) der Pumpe (1) zu bestimmen, indem die Temperatur der Pumpe (1) mit Hilfe von wenigstens einer Relation zwischen der Temperatur der Pumpe und wenigstens eines Betriebsparameters der Pumpe (1) gemessen und/oder abgeschätzt wird.

7. Verfahren nach einem der Ansprüche 1 bis 6, **dadurch gekennzeichnet, dass** der Vergleichsschritt (19) von wenigstens einem Funktionswert des Druckverlusts mit wenigstens einem Referenzwert wenigstens einen Vergleich von wenigstens einem Absolutwert des Druckverlusts (20) im Filter (5) für wenigstens einen gegebenen Arbeitsdurchsatz oder wenigstens einen gegebenen Arbeitsdurchsatzbereich des Kreislaufs mit wenigstens einem Schwellenwert (22,24) für wenigstens den gleichen Kraftstoffdurchsatz oder wenigstens den gleichen Kraftstoffdurchsatzbereich umfasst.

8. Verfahren nach einem der Ansprüche 1 bis 7, **dadurch gekennzeichnet, dass** der Vergleichsschritt (19) von wenigstens einem Funktionswert des Druckverlusts mit wenigstens einem Referenzwert wenigstens einen Vergleich von wenigstens einem Steigungswert der Veränderung des Druckverlusts (20) des Filters (5) über die Zeit mit wenigstens einem Steigungsschwellenwert (25) für wenigstens einen gegebenen Arbeitsdurchsatz oder wenigstens einen gegebenen Arbeitsdurchsatzbereich des Kreislaufs umfasst.

9. Verfahren nach einem der Ansprüche 1 bis 8, **dadurch gekennzeichnet, dass** der Vergleichsschritt (19) von wenigstens einem Funktionswert des Druckverlusts mit wenigstens einem Referenzwert wenigstens einen Vergleich von wenigstens einem Absolutwert und/oder einer Steigungsänderung des Druckverlusts (20) des Filters (5) zu einem gegebenen Zeitpunkt mit wenigstens einem analogen Wert (24, 25) zu wenigstens einem früheren Zeitpunkt für wenigstens einen gegebenen Arbeitsdurchsatz oder wenigstens einen gegebenen Arbeitsdurchsatzbereich des Kreislaufs umfasst.

10. Einrichtung zur Erfassung der Verschmutzung eines Kraftstofffilters (5) in einem Kraftstoffversorgungskreislauf eines Verbrennungsmotors (10), wobei der Filter (5) zwischen dem Ausgang der Pumpe (1), die von einem elektrischen Motor angetrieben wird und die von einem Tank (3) herkommenden Kraftstoff fördert, und dem Eingang eines Kraftstoffdruckreglers (7), der von der Pumpe (1) über den Filter (5) versorgt wird und der einen Kraftstoffdruck Richtung Motor (10) anlegt, angeordnet ist,
**dadurch gekennzeichnet, dass** sie eine elektronische Steuereinheit (4) umfasst, die das Betreiben der Pumpe (1) und ihres elektrischen Antriebsmotors steuert/regelt und die einerseits den durch den Regler (7) angelegten Kraftstoffdruck (18) als Funktion des Kraftstoffbedarfs des Motors (10) kennt und andererseits den Kraftstoffdruck (16) am Ausgang der Pumpe (1) als Funktion von wenigstens einem Betriebsparameter der Pumpe (1) und/oder eines Parameters der elektrischen Versorgung und/oder eines Betriebsparameters ihres elektrischen Antriebsmotors, wie etwa der Momentandrehzahl (14) der Pumpe (1), des mittleren Versorgungsstroms (13) des elektrischen Antriebsmotors und des thermischen Zustands (15) der Pumpe, bestimmt, wobei die elektronische Steuereinheit (4) den Druckverlust (20) in dem Filter (5) berechnet, der der Differenz zwischen den Kraftstoffdrücken (16) am Ausgang der Pumpe (1) und dem durch den Regler (7) angelegten entspricht, und wenigstens einen Funktionswert des Druckverlusts (20) und /oder von wenigstens einer Veränderung des Druckverlusts (20) mit wenigstens einem Referenzwert (22, 24, 25) vergleicht (19), um daraus eine Information (26) über den Verschmutzungszustand des Filters (5) abzuleiten.
